# EUROPÄISCHE PATENTSCHRIFT

(11) **EP 1 491 937 B1**
(45) Veröffentlichungstag und Bekanntmachung des Hinweises auf die Patenterteilung: **26.09.2007**
(21) Anmeldenummer: 04015069.0
(22) Anmeldetag: 26.06.2004
(51) Int. Cl.: G02C 7/08

(54) **Fernrohr- oder Lupenbrille**
Telescopic or magnifying spectacles
Lunettes télescopiques/loupes

(30) Priorität: 27.06.2003 DE 10328951
(43) Veröffentlichungstag der Anmeldung: 29.12.2004
(73) Patentinhaber: ESCHENBACH OPTIK GmbH + Co., 90409 Nürnberg (DE)
(72) Erfinder: Henkelmann, Klaus, 90552 Röthenbach (DE); Kohl, Peter, 90552 Oberasbach (DE)
(74) Vertreter: Mörtel & Höfner

(56) Entgegenhaltungen:
- WO-A-96/26415
- CH-A- 400 610
- DE-A- 3 530 649
- GB-A- 1 010 249
- US-A- 2 078 590

## Beschreibung

Die Erfindung bezieht sich auf eine Fernrohr- oder Lupenbrille.

Eine Fernrohr- oder Lupenbrille enthält entweder monokular oder binokular ein stark vergrößerndes optisches System, das je nach Verwendungszweck (Fernbereich oder Nahbereich) entweder ein Fernrohr- oder ein Lupensystem (Fernrohrlupe) ist. Eine solche Fernrohr- oder Lupenbrille dient einerseits zur Herstellung einer gewissen Sehfähigkeit bei Patienten, deren Sehvermögen stark eingeschränkt ist. Andererseits dient sie in monokularer oder binokularer Ausgestaltung auch als Arbeitshilfe bei der Durchführung von feinen Arbeiten, beispielsweise im Bereich der Chirurgie.

Wesentlich für die Inanspruchnahme einer derartigen Sehhilfe durch Fehlsichtige ist einerseits, dass deren komplette Anfertigung, d.h der Einbau des optischen Systems in ein Brillengestell und dessen Anpassung an den Träger der Brille, problemlos durch einen Augenoptiker vorgenommen werden kann. Nur in einem solchen Falle ist eine flächendeckende Versorgung der Fehlsichtigen möglich. Andererseits ist ebenso entscheidend die Akzeptanz einer derartigen Sehhilfe, d. h. die Bereitschaft eines Fehlsichtigen diese Sehhilfe auch tatsächlich zu benutzen. Diese Akzeptanz hängt wesentlich vom äußeren Erscheinungsbild einer solchen Sehhilfe ab. Sehhilfen, wie sie beispielsweise aus der deutschen Patentschrift 35 30 649 C2 oder der schweizerischen Patentschrift 400 610 bekannt sind, haben aufgrund der über die Fassungsebene der Brillenfassung weit vorstehenden Fernrohrtuben ein auffälliges Erscheinungsbild, das den Träger der Brille in der Öffentlichkeit von weitem als "Sehbehinderten" stigmatisiert. Entsprechend niedrig ist deren Akzeptanz.

Aus dem US-Patent 5,090,796 ist eine Hilfseinrichtung in Form einer Brille zum Anpassen einer Fernrohrbrille an eine Person bekannt, bei der ebenso wie bei der aus der DE 35 30 649 C2 bekannten Fernrohrbrille ein Teleskop in einen Trägerrahmen eingesetzt wird, der in eine Brillenfassung eingebaut ist, und in dem es zur Einstellung der Pupillendistanz quer zur Pupillenachse verschoben werden kann. Die bekannte Hilfseinrichtung dient jedoch nur zum Ausmessen der für die eigentliche Fernrohrbrille erforderlichen Einstellungen und Korrekturlinsen.

Bei einer aus der US 2,078,590 bekannten Fernrohrbrille wird alternativ zu dem aus der DE 35 30 649 C2 bekannten Konzept das Gehäuse des Teleskopes unmittelbar am Rahmen des Brillengestells montiert. Dadurch ist die individuelle Anpassung an den Träger der Brille erschwert.

Der Erfindung liegt nun die Aufgabe zu Grunde, eine Fernrohr- oder Lupenbrille anzugeben, die einfach an den Träger der Brille angepasst werden kann, und deren äußeres Erscheinungsbild gegenüber den im Stand der Technik bekannten Fernrohr- oder Lupenbrillen deutlich unauffälliger ist.

Die genannte Aufgabe wird gemäß der Erfindung gelöst mit einer Fernrohr- oder Lupenbrille mit den Merkmalen des Patentanspruches 1. Gemäß diesen Merkmalen enthält die Fernrohr- oder Lupenbrille ein in eine Brillenfassung eingebautes optisches System, das eine Mehrzahl von Linsen umfasst, die in einem Gehäuse angeordnet sind, das zum Einstellen der Pupillendistanz in einer Aufnahmeöffnung eines an die Brillenfassung angepassten Trägerrahmens quer zur optischen Achse verschiebbar gelagert ist, und das einen über eine durch die Brillenfassung festgelegte Brillenfassungsebene vorstehenden Gehäuseteil aufweist, der sich zur Objektivlinse hin verjüngt und dessen Basis sich in dieser Brillenfassungsebene bis nahe an den Rand der Brillenfassung derart erstreckt, dass die Aufnahmeöffnung von der Basis des vorstehenden Gehäuseteils überdeckt wird. Durch diese Maßnahmen ist eine einfache Einstellung auf die Pupillendistanz des Patienten möglich, ohne dass es hierzu der Verwendung unterschiedlicher Brillengestelle oder Trägerrahmen bedarf, so dass mit geringem Aufwand eine optimale Abbildungsqualität erzielt werden kann. Da sich das vorstehende Gehäuseteil mit seiner Basis bis nahe an den Rand der Brillenfassung erstreckt, d.h. die Basisfläche des vorstehenden Gehäuseteils deutlich größer ist als der für die optische Abbildung erforderliche Durchmesser des optischen Systems, kann die im Trägerrahmen befindliche Durchgangs- oder Aufnahmeöffnung größer sein als dieser Durchmesser, wobei dennoch sichergestellt ist, dass auch bei Positionierung des optischen Systems außerhalb der Mitte der Durchgangsöffnung diese von der Basisfläche des vorstehenden Gehäuseteils überdeckt wird. Auf diese Weise ergibt sich ein ästhetischer Gesamteindruck.

Durch die sich zur Objektivlinse hin verjüngende Gestaltung der Oberfläche des über die Brillenfassungsebene vorstehenden Gehäuseteils erhält dieses insbesondere bei einer konvexen, d. h. nach außen gewölbten Krümmung eine Form, die derjenigen einer dicken Linse gleicht und im äußeren Erscheinungsbild weitgehend einer Brille mit einem dicken Brillenglas ähnelt. Darüber hinaus ist durch diese Gestaltung, d. h. durch den sich verjüngenden Verlauf von einer breiteren Basisfläche zur Objektivöffnung, die Gefahr einer Zerstörung durch unbeabsichtigt am Fernrohrtubus ansetzende Hebelkräfte, beispielsweise beim Transport oder der Lagerung der Brille, verringert.

In einer bevorzugten Ausführungsform verläuft der Übergang von der Objektivlinse zu dem diese umgebenden Rand des Gehäuseteils ohne Absatz (stetiger Verlauf ohne Stufe). Durch das Fehlen einer Stufe ergibt sich ein besonders unauffälliges Erscheinungsbild.

Gemäß einer weiteren vorteilhaften Ausführungsform wird der optische Eindruck eines brillenglasähnlichen Erscheinungsbildes zusätzlich dadurch verbessert, dass zumindest in der durch die beiden optischen Brillenfassungsachsen der Fernrohr- oder Lupenbrille festgelegten Ebene ein fließender Übergang von Objektiv zum Gehäuseteil vorgesehen ist.

Vorzugsweise ist das Gehäuse zumindest transluzent. Durch die Verwendung eines zumindest transluzenten Gehäuses, d.h. eines Gehäuses, das lichtdurchlässig ist, aber entweder in Form einer Mattscheibe ausgeführt (engere Bedeutung des Begriffes transluzent) oder durchsichtig ist, wird das äußere Erscheinungsbild weiter verbessert.

In einer besonders bevorzugten Ausführungsform bildet das vorstehende Gehäuseteil zugleich die Objektivlinse. Dadurch wird die Anzahl der zur Herstellung der Fernrohr- oder Lupenbrille erforderlichen Bauteile verringert.

Um ein unbeabsichtigtes Verstellen der Pupillendistanz zu verhindern, ist in einer bevorzugten Ausführungsform das Gehäuse im Endmontagezustand fixierbar.

Vorzugsweise weisen hierzu das Gehäuse und der Trägerrahmen Rastmittel auf, die im eingebauten Zustand ineinander eingreifen und das Gehäuse gegen ein Verschieben quer zur optischen Brillenfassungsachse fixieren. Dadurch ist bei in die Brillenfassung eingebautem optischen System ein unbeabsichtigtes Verstellen der optischen Achse des optischen Systems relativ zur Brillenfassung verhindert.

Alternativ hierzu sind das Gehäuse und der Trägerrahmen im Endmontagezustand axial gegeneinander verspannt.

Eine besonders hohe Flexibilität des Einsatzbereiches wird erzielt, wenn gemäß einer weiteren vorteilhaften Ausgestaltung der Erfindung die Brennweite des optischen Systems verstellbar ist.

Ein Ausführungsbeispiel der Erfindung wird an Hand der Zeichnung näher erläutert. Es zeigen:
- Fig. 1, 2 und 3: eine Fernrohr- oder Lupenbrille mit einem in eine Brillenfassung eingebauten optischen System gemäß der Erfindung in einer Draufsicht von vorne, in einer verkleinerten perspektivischen Darstellung, und in einer Teilansicht von schräg unten,
- Fig. 4: einen Schnitt durch das optische System in der durch die beiden Brillenfassungsachsen der Fernrohr- oder Lupenbrille festgelegten Ebene,
- Fig. 5: einen Schnitt in der dazu senkrechten Ebene,
- Fig. 6, 7: jeweils eine Explosionsdarstellung voneinander verschiedener erfindungsgemäßer Ausführungsformen eines zum Einbau in die Brillenfassung vorgesehenen optischen Systems,
- Fig. 8: einen Schnitt durch das optische System in einer zur Brillenfassungsachse senkrechten und außerhalb der optischen Achse des optischen Systems liegenden Ebene.

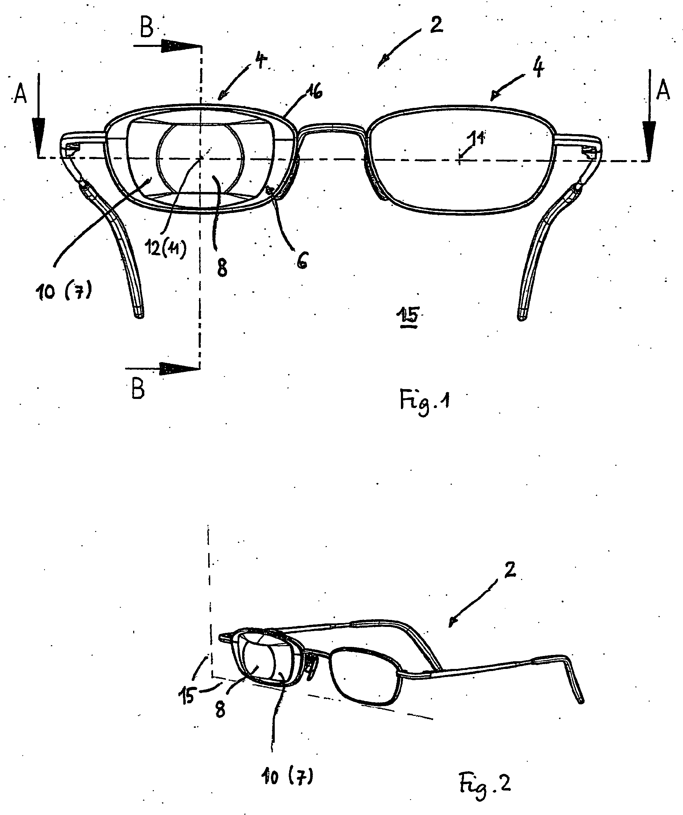

Gemäß Figur 1 umfasst eine Fernrohr- oder Lupenbrille ein Brillengestell 2, bei dem in einer der Brillenfassungen 4 ein optisches System 6 eingebaut ist, das eine Mehrzahl von Linsen umfasst, die in einem mehrteiligen Gehäuse 7 angeordnet sind. Das optische System 6 ist entweder eine Fernrohrlupe oder ein Fernrohr. Ein Gehäuseteil 10 des Gehäuses 7 steht über die von den Brillenfassungen 4 festgelegte und parallel zur Zeichenebene verlaufenden Brillenfassungsebene 15 vor oder über und umgibt eine äußere Objektivlinse 8 des optischen Systems 6. Dieses Gehäuseteil 10 erstreckt sich in einer durch die optischen Brillenfassungsachsen 11 festgelegten Ebene AA nahe und in der dazu senkrechten Ebene BB bis an den Fassungsrand 16 der Brillenfassung 4. Im dargestellten Ausführungsbeispiel fällt die optische Achse 12 des optischen Systems 6 mit einer Brillenfassungsachse 11 zusammen. Bei korrekter Anpassung der Fernrohr- oder Lupenbrille fällt die optische Achse 12 des optischen Systems 6 mit der Pupillenachse des Trägers der Brille zusammen, die in der Regel außerhalb der Brillenfassungsachse 11 liegt.

In Figur 2 ist deutlicher zu erkennen, dass sich das Gehäuseteil 10 zur Objektivlinse 8 hin verjüngt und konvex gewölbt ist, wobei die Wölbungen in den Ebenen AA und BB voneinander verschieden sind. Mit anderen Worten: Ausgehend von der Objektivlinse 8 verbreitert sich das Gehäuseteil 10, so dass dessen Basis nahezu die Abmessungen der Brillenfassung 4 aufweist. Die in der Figur dargestellten Kanten im Gehäuseteil 10 sind in der tatsächlichen Ausführung praktisch nicht erkennbar und dienen in der Zeichnung lediglich zur Unterstützung des räumlichen Eindrucks der Darstellung, so dass das Gehäuseteil 10 gemeinsam mit der Objektivlinse 8 in der Praxis annähernd das Aussehen einer dicken Konvexlinse hat.

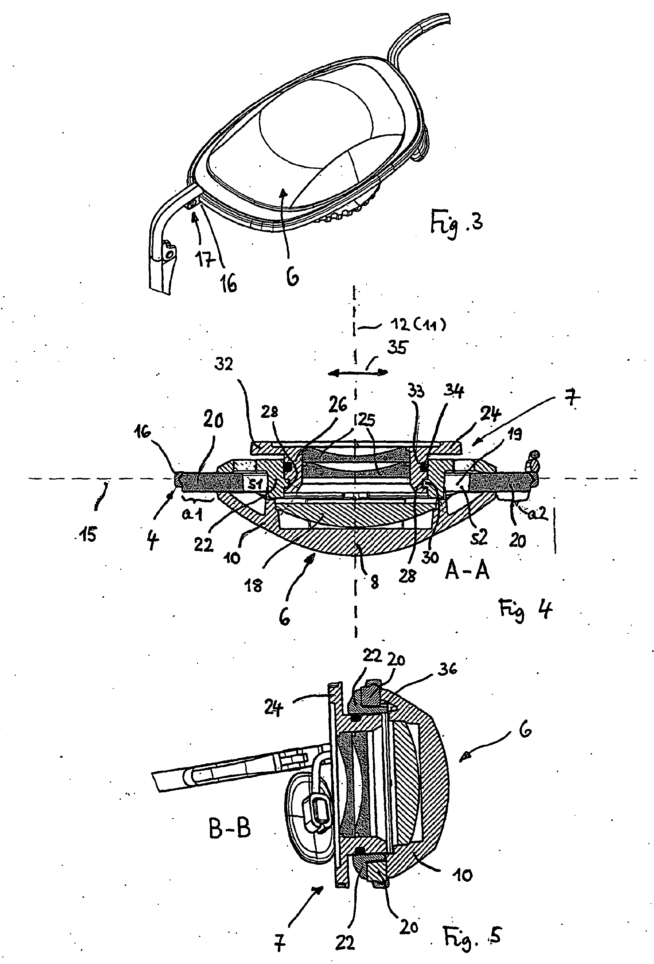

Gemäß Fig. 3 enthält die Brillenfassung 4 am Fassungsrand 16 einen Schließblock 17, der im geöffneten Zustand ein Spreizen der Brillenfassung 4 und damit einen Einbau des optischen Systems 6 ermöglicht.

Gemäß Figur 4 werden das über die Brillenfassungsebene 15 vorstehende Gehäuseteil 10 und die Objektivlinse 8 durch ein gemeinsames Teil, vorzugsweise ein transparentes Spritzgussteil aus Polymethylmethacrylat PMMA, Polycarbonat PC, Cycloolefincopolymer COC oder Cycloolefinpolymer COP gebildet. Das die Objektivlinse 8 umgebende Gehäuseteil 10 kann auch an seiner äußeren Oberfläche aufgerauht oder mattiert sein, so dass es lediglich transluzent ist und bei Betrachtung von außen je nach Umgebungslicht in einem matten Grau erscheint.

Der Übergang zwischen dem Gehäuseteil 10 und der Objektivlinse 8 verläuft ohne Absatz. Das Gehäuseteil 10 ist außerdem in dieser Ebene AA derart konvex gekrümmt und an die konvexe Krümmung der Objektivlinse 8 angepasst, dass sich in dieser Schnittebene ein fließender Übergang ergibt.

Im Gehäuseteil 10 ist außerdem zur Brechkrafterhöhung eine innere Objektivlinse 18 angeordnet

Das optische System 6 ist mit seinem Gehäuse 7 in die Aufnahmeöffnung 19 eines Trägerrahmens 20 eingesetzt und in diesem im Endmontagezustand fixiert. Mit diesem Trägerrahmen 20 ist das optische System 6 in die Brillenfassung 4 eingesetzt. Das Gehäuseteil 10 stützt sich im montierten Zustand mit seinem äußeren Rand auf der äußeren Flachseite des Trägerrahmens 20 ab. Zur axialen Fixierung, d. h. zur Fixierung in Richtung der optischen Achse 12 im Trägerrahmen 20 ist das Gehäuseteil 10 mit einem Zwischenteil 22 verschweißt, verklebt oder verschraubt, das sich flanschartig auf der inneren Flachseite des Trägerrahmens 20 abstützt.

In das Zwischenteil 22 ist ein Okularträger 24 eingesetzt, in dem zwei Plankonkavlinsen 25 gelagert sind, die als Okular des optischen Systems 6 und zugleich zur sphärischen Korrektion dienen. Eine zylindrische Korrektion kann nachträglich durch Einsetzen einer Zylinderlinse auf der dem Auge zugewandten Rückseite des Okularträgers 24 durchgeführt werden.

Der Okularträger 24 weist einen annähernd zylindrischen Teil 26 mit zwei am Außenmantel schraubenförmig angeordneten Nuten 28 auf, in die jeweils ein an der innenliegenden Oberfläche des Zwischenteils 20 angeordneter Zapfen 30 eingreift, so dass durch Verdrehen des Okularträgers 24 der Abstand zwischen Okularlinsen 25 und Objektivlinsen 8,18 und damit die Brennweite oder Brechkraft des optischen Systems 6 eingestellt werden kann. Hierzu ist der Okularträger 24 an seinem der Objektivlinse 8 abgewandten Ende mit einer über das Zwischenteil 20 vorstehenden Rändelscheibe 32 versehen, die das Verdrehen des Okularträgers 24 erleichtert. Auf diese Weise kann eine Fokusveränderung des optischen Systems 6 erzielt werden, mit der eine Fehlsichtigkeit des Trägers der Brille um ± 4 Dioptrien ausgeglichen werden kann, oder es kann ermöglicht werden, dass die Brille ohne Austausch des optischen Systems wahlweise als Fernrohrbrille für die Betrachtung von Objekten im Unendlichen oder als Fernsehbrille für Objekte in einer Entfernung von 2-3m eingestellt werden kann.

Um ein unbeabsichtigtes Verdrehen des Okularträgers 24 nach erfolgter Einstellung zu verhindern, ist im zylindrischen Teil 26 eine außenliegende Ringnut 33 angeordnet, in die ein O-Ring 34 eingelegt ist, um eine kontrollierte Schwergängigkeit zu bewirken. In der Praxis ist der annähernd zylindrische Teil 26 ein Spritzgussteil aus Kunststoff und konisch mit einer kaum erkennbaren Schräge in der Größenordnung von 1° geformt, um ein Entformen zu erleichtern (Entformungsschräge).

Alternativ zu einer kontrollierten Schwergängigkeit kann auch vorgesehen sein, die Rändelscheibe 32 nach erfolgter Einstellung der gewünschten Brennweite reversibel, beispielsweise durch lösbare, in die Zahnung der Rändelscheibe 32 eingreifende Haltestifte, oder irreversibel, beispielsweise durch Verkleben, zu arretieren. Eine solche Arretierung ist insbesondere dann zweckmäßig, wenn eine zylindrische Korrektion erforderlich ist.

Die lichte Weite der Aufnahmeöffnung 19 in der Schnittebene AA ist gößer als der maximale Außendurchmesser des optischen Systems 6 im Bereich dieser Aufnahmeöffnung 19, so dass beidseitig Spalte s1, s2 verbleiben. Außerdem sind in dieser Schnittebene AA zwischen dem Fassungsrand 16 und dem seitlichen Rand des Gehäuseteils 10 jeweils Abstände a1, a2 vorgesehen. Diese Abstände a1, a2 sowie die Spalte s1, s2 ermöglichen in der Ebene AA eine variable Positionierung der optischen Achse 12 des optischen Systems 6 relativ zum Fassungsrand 16 bzw. relativ zur Brillenfassungsachse 11, wie es durch den Doppelpfeil 35 veranschaulicht ist (bei der in der Fig. dargestellten Einstellung fallen optische Achse 12 und Brillenfassungsachse 11 zusammen). Eine endgültige Fixierung der Lage der optischen Achse 12 ist dadurch in unterschiedlichen Positionen innerhalb der Brillenfassung 4 möglich, so dass mit demselben Brillengestell eine Einstellung des optischen Systems 6 auf unterschiedliche Pupillendistanzen möglich ist.

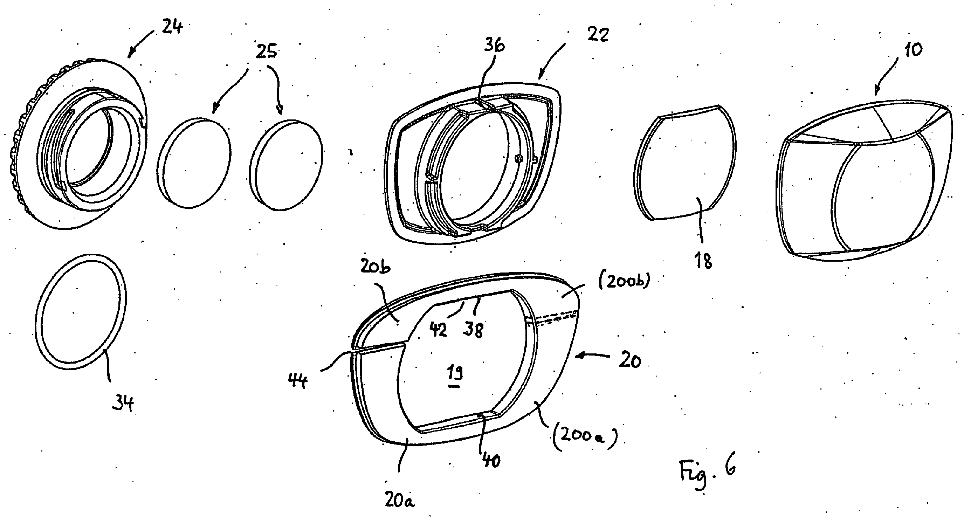

In Figur 5 ist zu erkennen, dass eine solche variable Einstellung in der dazu senkrechten Ebene BB nicht möglich ist. Zur Fixierung der korrekt auf die Pupillenposition eingestellten Lage der optischen Achse 12 in der Richtung senkrecht zur Zeichenebene weist das Zwischenteil 22 an seinem durch den Trägerrahmen 20 hindurchgesteckten Teil einen oder mehrere Zähne 36 auf, die im Endmontagezustand, d h. bei in die Brillenfassung eingebauten Trägerrahmen 20 mit einer in ihm angeordneten geradlinigen, im Schnittbild der Figur nicht sichtbaren Zahnreihe im Eingriff stehen. Durch diese Verrastung ist das optische System 6 im Trägerrahmen 22 in allen Richtungen fixiert.

Dies ist in der perspektivischen Darstellung gemäß Figur 6 deutlicher zu erkennen. Die Aufnahmeöffnung 19 des Trägerrahmens 20 weist einander gegenüberliegende Lagerflächen 38, 40 auf, die mit entsprechenden Lagerflächen am Zwischenteil 20 korrespondieren. Die Lagerfläche 38 ist mit einer Zahnreihe 42 versehen, die mit den Zähnen 36 am Zwischenteil 22 im Endmontagezustand im Eingriff stehen. Die untere Lagerfläche 40 ist plan.

Der Trägerrahmen 20 ist auf einer Seite mit einem Schlitz 44 versehen, durch den es möglich ist, die auf diese Weise gebildeten Schenkel 20a, 20b des Trägerrahmens 20 bis zu einem durch seine Elastizität gegebenen Ausmaß aufzuklappen, und das Zwischenteil 22 gemeinsam mit dem mit ihm verklebten oder verschweißten Gehäuseteil 10 in der Aufnahmeöffnung 19 quer zur optischen Achse zu verschieben. Diese Verschiebung ist noch möglich, wenn der mit dem optischen System 6 bestückte Trägerrahmen 20 bereits in die Brillenfassung eingesetzt, dort aber noch nicht endgültig fixiert ist, da diese ebenfalls aufgespreizt werden kann. Die endgültige Einstellung auf die korrekte Pupillendistanz und Lage kann somit noch dann vorgenommen werden, wenn der Träger der Brille das Brillengestell mit provisorisch, d. h. noch nicht endgültig fixiertem optischen System 6 aufgesetzt hat. Dies ermöglicht eine problemlose Einstellung durch den Augenoptiker. Ist die optische Achse 6 korrekt auf die Pupillenachse eingestellt, wird ein einem letzten Montageschritt der Schließblock 50 (Fig. 3) und damit auch der Schlitz 44 geschlossen. Die Zähne 36 verrasten in der Zahnreihe 42, so dass im Endmontagezustand das zusammengesetzte Gehäuse 7 und damit das optische System 6 gegen ein Verschieben gesichert ist. In dieser Ausgestaltung kann das Verschweißen des Gehäuseteils 10 mit dem Zwischenteil 22 erst dann erfolgen, nachdem der Trägerrahmen 20 zwischen Gehäuseteil 10 und Zwischenteil 22 eingelegt ist. Nach dem Verschweißen kann das aus Gehäuseteil 10 und Zwischenteil 22 gebildete Teilsystem nicht mehr aus dem Trägerrahmen 20 entfernt werden, sondern lediglich durch Aufklappen der Schenkel 20a,b in ihm parallel zu seiner Flachseite verschoben werden.

Alternativ zu der in der Figur dargestellten einteiligen, geschlitzten Ausführungsform des Trägerrahmens 20 ist es auch möglich, einen zweiteiligen Trägerrahmen 20 zu verwenden, wie dies gestrichelt in der Figur angedeutet ist, und bei dem ein unterer Bügel 200a und ein oberer Bügel 200b beispielsweise durch eine lösbare Steckverbindung zusammengesteckt werden..

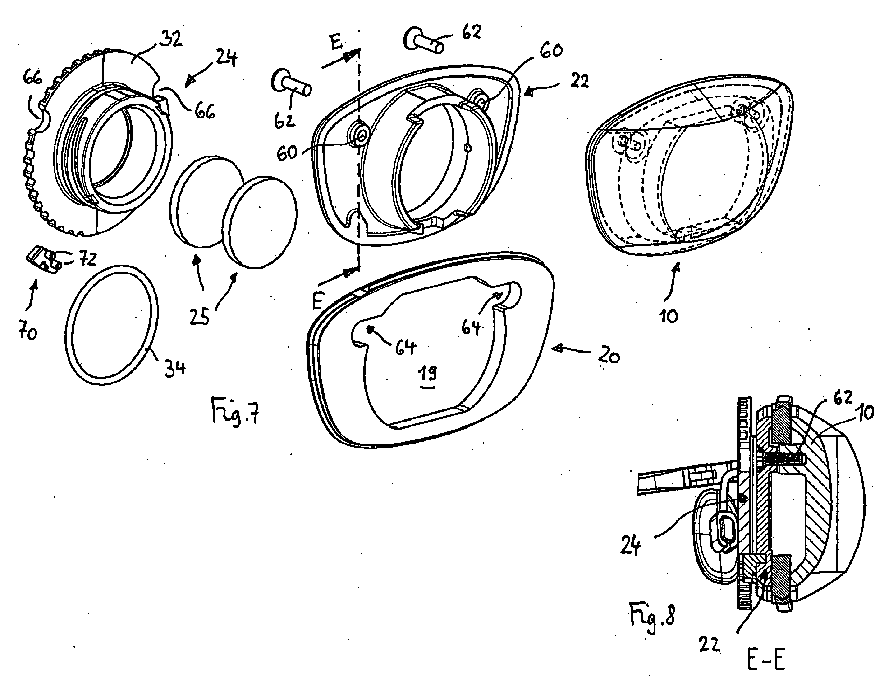

Anstelle der gemäß Figur 6 vorgesehenen Verrastung des Gehäuses 7 im Trägerrahmen 20 ist gemäß Figur 7 vorgesehen, dieses im Trägerrahmen 20 axial reibschlüssig zu verspannen. Hierzu umfasst das den Okularträger 24 aufnehmende Zwischenteil 22 Durchgangsbohrungen 60, durch die Schrauben 62 hindurchgeführt werden. Mit diesen Schrauben 62 wird das in den Trägerrahmen 20 eingesetzte Zwischenteil 22 mit dem die Objektivlinse bildenden Gehäuseteil 10 (in der Figur sind die Aufnahmebohrungen für die Schrauben 62 gestrichelt angedeutet) zunächst lose verschraubt, um ein seitliches Verstellen zu ermöglichen. Der Trägerrahmen 20 enthält hierzu schlitzförmige Ausnehmungen 64 für die hindurchgeführten Schrauben 62, die in die Aufnahmeöffnung 19 münden. Nach dem Einstellen der Endposition werden die Schrauben 62 festgezogen, und das Gehäuse 7 ist am Trägerrahmen 20 verklemmt. Um die Schrauben 62 trotz großem Durchmesser der Rändelscheibe 32 bedienen zu können, ist diese mit seitlichen Einkerbungen 66 versehen.

In der Figur 7 ist außerdem ein Riegel 70 dargestellt, der im Bedarfsfall eine Arretierung der Rändelscheibe 32 ermöglicht. Der Riegel 70 enthält hierzu zwei Haltezapfen 72, die lösbar in Ausnehmungen auf der Rückseite des Zwischenteils 22 eingesteckt werden, wenn die Brennweite des optischen Systems 6 eingestellt ist. Die Haltezapfen 72 greifen in die Zahnung der Rändelscheibe 32 ein und sichern diese und damit die Brennweite des optischen Systems 6 gegen unbeabsichtigtes Verstellen.

Im Schnittbild der Fig. 8 ist diese Klemmfixierung des Gehäuses 7 bzw. des optischen Systems 6 im Trägerrahmen 20 deutlich zu erkennen.

## Patentansprüche

1. Fernrohr- oder Lupenbrille mit einem in eine Brillenfassung (4) eingebauten optischen System (6), das eine Mehrzahl von Linsen (8,18,25) umfasst, die in einem Gehäuse (7) angeordnet sind, das zum Einstellen der Pupillendistanz in eine Aufnahmeöffnung (19) eines an die Brillenfassung (4) angepassten Trägerrahmens (20) in einer durch die optischen Brillenfassungsachsen (11) festgelegten Ebene (AA) quer zu diesen verschiebbar gelagert ist, und das ein über eine durch die Brillenfassung (4) festgelegte Brillenfassungsebene (15) vorstehendes Gehäuseteil (10) aufweist, das sich zur Objektivlinse (8) hin verjüngt, und dessen Basis sich in dieser Brillenfassungsebene (15) bis nahe an den Rand der Brillenfassung (4) derart erstreckt, dass die Aufnahmeöffnung (19) von der Basis des vorstehenden Gehäuseteils (10) überdeckt wird.

2. Fernrohr- oder Lupenbrille nach Anspruch 1, bei der das Gehäuseteil (10) konvex gekrümmt ist.

3. Fernrohr- oder Lupenbrille nach Anspruch 2, bei der der Übergang von der Objektivlinse (8) zu dem diese umgebenden Rand des Gehäuseteils (10) ohne Absatz verläuft.

4. Fernrohr- oder Lupenbrille nach Anspruch 3, bei der die Krümmung des Gehäuseteils (10) an die Krümmung der Objektivlinse (8) derart angepasst ist, dass sich zumindest in der durch die Brillenfassungsachsen (11) festgelegten Ebene ein fließender Übergang von der Objektivlinse (8) zum Gehäuseteil (10) ergibt.

5. Fernrohr- oder Lupenbrille nach einem der vorhergehenden Ansprüche, bei der das Gehäuse (7) transluzent ist.

6. Fernrohr- oder Lupenbrille nach Anspruch 4 oder 5, bei der der vorstehende Gehäuseteil (10) zugleich die Objektivlinse (8) bildet.

7. Fernrohr- oder Lupenbrille nach einem der vorhergehenden Ansprüche, bei der das Gehäuse (7) im Trägerrahmen (20) im Endmontagezustand fixierbar ist.

8. Fernrohr- oder Lupenbrille nach Anspruch 7, bei der das Gehäuse (7) und der Trägerrahmen (20) Rastmittel aufweisen, die im Endmontagezustand ineinander eingreifen und das Gehäuse (7) gegen ein Verschieben quer zur Brillenfassungsachse (11) fixieren.

9. Fernrohr- oder Lupenbrille nach Anspruch 7, bei der das Gehäuse (7) und der Trägerrahmen (20) im Endmontagezustand axial gegeneinander verspannt sind.

10. Fernrohr- oder Lupenbrille nach einem der vorhergehenden Ansprüche, bei der die Brennweite des optischen Systems (6) verstellbar ist.

## Claims

1. Telescopic or magnifying spectacles having an optical system (6) which is built into a spectacle frame (4) and comprises a plurality of lenses (8, 18, 25) which are arranged in a housing (7) which, for the purpose of setting the pupil distance in a holding opening (19) of a carrier frame (20) adapted to the spectacle frame (4), is supported in a plane (AA) defined by the optical axes (11) of the spectacle frame such that it can be displaced transverse to said axes, and which has a housing part (10), projecting beyond a plane (15) of the spectacle frame (4) and defined by the spectacle frame, which tapers towards the objective lens (8), and whose base extends in this plane (15) of the spectacle frame as far as near the edge of the spectacle frame (4) in such a way that the holding opening (19) is covered by the base of the projecting housing part (10).

2. Telescopic or magnifying spectacles according to Claim 1, in which the housing part (10) is convexly curved.

3. Telescopic or magnifying spectacles according to Claim 2, in which the transition from the objective lens (8) to the edge, surrounding the latter, of the housing part (10) runs without a step.

4. Telescopic or magnifying spectacles according to Claim 3, in which the curvature of the housing part (10) is adapted to the curvature of the objective lens (8) in such a way that a smooth transition from the objective lens (8) to the housing part (10) results, at least in the plane defined by the axes (11) of the spectacle frame.

5. Telescopic or magnifying spectacles according to one of the preceding claims, in which the housing (7) is translucent.

6. Telescopic or magnifying spectacles according to Claim 4 or 5, in which the projecting housing part (10) simultaneously forms the objective lens (8).

7. Telescopic or magnifying spectacles according to one of the preceding claims, in which the housing (7) can be fixed in the finally assembled state in the carrier frame (20).

8. Telescopic or magnifying spectacles according to Claim 7, in which the housing (7) and the carrier frame (20) have latching means which engage in one another in the finally assembled state and fix the housing (7) against being displaced transverse to the axis (11) of the spectacle frame.

9. Telescopic or magnifying spectacles according to Claim 7, in which the housing (7) and the carrier frame (20) are axially braced against one another in the finally assembled state.

10. Telescopic or magnifying spectacles according to one of the preceding claims, in which the focal length of the optical system (6) is adjustable.

## Revendications

1. Longue vue ou loupe ayant un système (6) optique, enchâssée dans une monture (4) et comprenant une multiplicité de lentilles (8, 18, 25) disposées dans un boîtier (7) qui, pour régler la distance entre les yeux, est montée dans une ouverture (19) de réception d'un cadre (20) porteur adapté à la monture (4), dans un plan (AA) fixé par les axes (11) optiques de la monture, mobile transversalement par rapport à celui-ci, et qui a une partie (10) de boîtier en saillie du plan (15) de la monture fixée par la monture (4) qui se rétrécie vers la lentille (8) d'objectif, et dont la base s'étend dans ce plan (15) de monture jusqu'à proximité du bord de la monture (4) de façon à ce que l'ouverture (19) de réception soit recouverte par la base de la partie (10) de boîtier en saillie.

2. Longue vue ou loupe suivant la revendication 1, dans laquelle la partie (10) de boîtier est convexe.

3. Longue vue ou loupe suivant la revendication 2, dans laquelle la transition de la lentille (8) d'objectif au bord de la partie (10) de boîtier qui l'entoure s'effectue sans retrait.

4. Longue vue ou loupe suivant la revendication 3, dans laquelle la courbure de la partie (10) de boîtier est adaptée à la courbure de la lentille (8) d'objectif de façon à ce que au moins dans le plan fixé par les axes (11) de la monture, il y ait une transition douce de la lentille (8) d'objectif à la partie (10) de boîtier.

5. Longue vue ou loupe suivant l'une des revendications précédentes, dans laquelle le boîtier (7) est translucide.

6. Longue vue ou loupe suivant la revendication 4 ou 5, dans laquelle la partie (10) de boîtier en saillie forme en même temps la lentille (8) d'objectif.

7. Longue vue ou loupe suivant l'une des revendications précédentes, dans laquelle le boîtier (7) peut être immobilisé dans le cadre (20) porteur à l'état fini de montage.

8. Longue vue ou loupe suivant la revendication 7, dans laquelle le boîtier (7) et le cadre (20) porteur ont des moyens d'encliquetage, qui s'interpénètrent à l'état fini de montage, et le boîtier (7) est immobilisé vis à vis d'un déplacement transversalement à l'axe (11) de la monture.

9. Longue vue ou loupe suivant la revendication 7, dans laquelle le boîtier (7) et le cadre (20) porteur sont bloqués axialement l'un contre l'autre à l'état fini de montage.

10. Longue vue ou loupe suivant l'une des revendications précédentes, dans laquelle la distance focale du système (6) optique est réglable.
